# EUROPÄISCHE PATENTSCHRIFT

(11) **EP 2 720 907 B1**
(45) Veröffentlichungstag und Bekanntmachung des Hinweises auf die Patenterteilung: **20.05.2015**
(21) Anmeldenummer: 12780123.1
(22) Anmeldetag: 10.10.2012
(51) Int. Cl.: B60R 9/04, F16B 5/02

(54) **BEFESTIGUNGSELEMENT MIT TOLERANZAUSGLEICHSFUNKTION**
FIXING ELEMENT WITH TOLERANCE ADJUSTMENT
DISPOSITIF DE FIXATION COMPRENANT UN COMPENSATEUR DE TOLÉRANCE

(30) Priorität: 27.10.2011 DE 102011054861
(43) Veröffentlichungstag der Anmeldung: 23.04.2014
(73) Patentinhaber: Böllhoff Verbindungstechnik GmbH, 33649 Bielefeld (DE)
(72) Erfinder: FIGGE, Hans-Ulrich, 33758 Schloss-Holte (DE); HEIMANN, Vanessa, 33098 Paderborn (DE); BURGER, Ingo, 33758 Schloss-Holte (DE)
(74) Vertreter: Heyer, Volker
(86) Internationale Anmeldenummer: PCT/EP2012/069997
(87) Internationale Veröffentlichungsnummer: WO 2013/060572

(56) Entgegenhaltungen:
- EP-A1- 0 476 158
- EP-A2- 2 108 545
- WO-A1-2008/129854
- WO-A2-2008/027476
- DE-A1- 3 121 086
- DE-B4- 10 354 117
- DE-U1- 9 217 488
- DE-U1-202004 018 079
- DE-U1-202011 105 943
- FR-A1- 2 770 481

## Beschreibung

### 1. Gebiet der Erfindung

Die vorliegende Erfindung betrifft ein Befestigungselement mit Toleranzausgleichsfunktion zur Befestigung von Anbauteilen, insbesondere Dachleisten, ein dazugehöriges Montageverfahren für derartige Anbauteile mit dem Befestigungselement und ein entsprechendes Demontageverfahren.

### 2. Hintergrund der Erfindung

Im Stand der Technik sind Befestigungselemente mit Toleranzausgleichsfunktion bekannt, die in unterschiedlichen technischen Gebieten eingesetzt werden. Ein Beispiel für ein Befestigungselement mit Toleranzausgleichsfunktion geht aus DE 103 54 117 B4 hervor. Das Toleranzausgleichselement besteht aus einem hohlzylindrischen Verstellelement, das in ein hohlzylindrisches Basiselement geschraubt wird. Über die Tiefe des Einschraubens des hohlzylindrischen Verstellelements in das Basiselement wird die Toleranz zwischen zwei beabstandeten Bauteilen ausgeglichen. Nach dem Ausgleich der Toleranz stützt sich ein am Verstellelement umlaufender fester Kragen an dem einen Bauteil ab, während sich die abgewandte Stirnseite des Basiselements an dem anderen Bauteil abstützt. Dies führt häufig zu Ausbeulungen an einem der beiden Bauteile, falls die Länge des Toleranzausgleichselements nicht genau eingestellt ist. Zur Befestigung des Toleranzausgleichselements an den beiden Bauteilen wird ein Gewindebolzen das Toleranzausgleichselement durchlaufend an einem Anbauteil befestigt.

Ein weiteres Toleranzausgleichselement ist in DE 10 2008 026 414 A1 beschrieben. Das Toleranzausgleichselement besteht aus einem hohlzylindrischen Verstellelement, einem hohlzylindrischen Basiselement sowie einem ringförmigen Aufsatzelement, das radial verschiebbar an einer Stirnseite des hohlzylindrischen Basiselements anliegt. Auf diese Weise ist aufgrund der Formgebung des Aufsatzelements und/oder der Stirnseite des hohlzylindrischen Basiselements eine winklige Ausrichtung zwischen den Mittelachsen von Basis - und Aufsatzelement einstellbar. Eine Befestigung des Toleranzausgleichselements an den beiden beabstandeten Bauteilen erfolgt durch einen Gewindebolzen.

Eine andere Vorrichtung zur Befestigung einer Dachreling auf einem Fahrzeugdach ist in DE 102 39 022 A1 beschrieben. Die Vorrichtung weist einen Bolzen auf, der von einem auf der Dachhaut aufsitzenden Fußteil des Dachaufbaus durch eine Öffnung in der Dachhaut sowie eine Öffnung in einem in Abstand unter der Dachhaut angeordneten Karosserieblechteil hindurch geführt ist. Weiterhin ist die Vorrichtung mit einem Gegenhalter für eine Befestigung des Bolzens an dem Karosserieblechteil durch eine auf dem Bolzen aufgeschraubte Mutter versehen. Der Bolzen weist einen mit dem Gegenhalter versehenen Bolzenteil auf, welcher unter Verstellung der axialen Position des Gegenhalters gegen den übrigen Bolzen bewegbar ist.

Eine Befestigungsvorrichtung zum Festspannen eines ersten Elements und eines zweiten Elements beabstandet voneinander, wobei sie in gegenseitigem Abstand gehalten werden, ist in WO 2008/129854 A1 offenbart. Die Befestigungsvorrichtung umfasst eine Mutter, die am ersten Element befestigt ist, einen Halter, der am ersten Element befestigt ist, eine Stellmutter, die im Halter nicht drehbar aber in axialer Richtung beweglich angeordnet ist, einen Bolzen, der vom zweiten Element in Richtung des ersten Elements eingesetzt ist sowie einen Schraubenbolzen, der vorübergehend auf einen Außengewindeabschnitt des Bolzens über ein Drehmomentübertragungsmittel geschraubt ist.

DE 31 21 086 A1 beschreibt eine Vorrichtung zur Befestigung eines Aufbaus, insbesondere einer Rehling für einen Dachgepäckständer auf einem Fahrzeugdach. Die Vorrichtung besteht aus einem Bolzen, der im Fahrzeugdach und im Dachrahmen des Fahrzeugs vorgesehene miteinander fluchtende Bohrungen durchsetzt, einendig ein Außengewinde zum Eindrehen in eine entsprechende Gewindebohrung des Aufbaus und anderendig ein Außengewinde zur Aufnahme einer den Bolzen am Dachrahmen festlegenden Schraubenmutter sowie einen im montierten Zustand zwischen Aufbau und Dachrahmen angeordneten Bund größeren Durchmessers aufweist. Eine passgenaue Montage des Aufbaus wird durch eine in der Einbaulage vom Bolzen durchsetzte teleskopierbare Stellbuchse mit einer in den Dachrahmen hineinragenden und sich an dieser abstützenden Außenbuchse mit Innengewinde und einer darin drehbar angeordneten, als Anschlag für den Bund des Bolzens dienenden Innenbuchsen mit dem entsprechenden Außengewinde ermöglicht.

DE3121086 A1 offenbart somit ein Befestigungselement mit Toleranzausgleichsfunktion zur Befestigung von Anbauteilen, insbesondere Dachleisten, das die folgenden Merkmale aufweist: a) einen Gewindebolzen mit einem Befestigungsbereich für ein Anbauteil, einem Gewindebereich sowie einem radialen Vorsprung zwischen dem Befestigungsbereich und dem Gewindebereich, b) ein Positionier- und Unterstützungselement, das sich am Vorsprung abstützt, c) ein Verstellelement, das im Gewindebereich angeordnet ist, und d) ein Befestigungsmittel, das im Gewindebereich benachbart zum Verstellelement angeordnet ist.

Es ist die Aufgabe der vorliegenden Erfindung, ein Befestigungselement mit Toleranzausgleichsfunktion zur Befestigung von Anbauteilen sowie ein entsprechendes Montage- und Demontageverfahren bereitzustellen, mit dem auf einfache Weise und ohne Verformung der Bauteile eine Befestigung von Anbauteilen beispielsweise am Kraftfahrzeug möglich ist.

### 3. Zusammenfassung der Erfindung

Die oben genannte Aufgabe wird durch ein Befestigungselement mit Toleranzausgleichsfunktion zur Befestigung von Anbauteilen gemäß dem unabhängigen Patentanspruch 1, durch einen Dachbereich eines Kraftfahrzeugs, an dem ein Anbauteil mit dem erfindungsgemäßen Befestigungselement befestigt ist, gemäß Patentanspruch 12, ein Montageverfahren eines Anbauteils mittels des erfindungsgemäßen Befestigungselements gemäß Patentanspruch 13 sowie ein Demontageverfahren eines Anbauteils, dass mit dem erfindungsgemäßen Befestigungselement befestigt ist, gemäß Patentanspruch 17 gelöst. Vorteilhafte Ausgestaltungen und Weiterentwicklung der vorliegenden Erfindung gehen aus der Beschreibung, den begleitenden Zeichnungen sowie den anhängigen Patentansprüchen hervor.

Das erfindungsgemäße Befestigungselement mit Toleranzausgleichsfunktion zur Befestigung von Anbauteilen, insbesondere Dachleisten, weist die folgenden Merkmale auf: einen Gewindebolzen mit einem Befestigungsbereich für ein Anbauteil, einem Gewindebereich sowie einem radialen Vorsprung zwischen dem Befestigungsbereich und dem Gewindebereich, ein Positionier- und Unterstützungselement, das benachbart des Befestigungsbereichs an dem Gewindebolzen angeordnet ist und sich am Vorsprung abstützt, ein Verstellelement, das im Gewindebereich angeordnet ist, sodass ein Abstand zum Positionier- und Unterstützungselement einstellbar ist, und ein zu dem Gewindebereich passendes Innengewinde sowie ein Antriebsmittel aufweist, wobei das Antriebsmittel radial innen liegend angeordnet ist, und ein Befestigungsmittel, das im Gewindebereich benachbart zum Verstellelement angeordnet ist.

Das erfindungsgemäße Befestigungselement weist das Positionier- und Unterstützungselement sowie das Verstellelement angeordnet an einem Gewindebolzen auf. Beispielsweise handelt es sich bei dem Gewindebolzen um eine Blindnietschraube. Dadurch, dass sich das Positionier- und Unterstützungselement am radialen Vorsprung abstützt, ändert das Positionier- und Unterstützungselement insbesondere bei einer späteren Belastung durch ein erstes Bauteil seine Position in Bezug auf den Gewindebolzen nicht. Auf den Gewindebereich des Gewindebolzens ist das Verstellelement aufgeschraubt.

Bei der Verwendung des Befestigungselements wird das Befestigungselement mit dem Anbauteil, beispielsweise einer Dachleiste, verbunden. Anschließend wird das Befestigungselement durch eine Öffnung in einem ersten Bauteil und eine Öffnung in einem zweiten Bauteil gesteckt, bis das Anbauteil und das erste Bauteil benachbart zueinander angeordnet sind. Bei dem ersten Bauteil kann es sich beispielsweise um eine Dachhaut handeln, während es sich bei dem zweiten Bauteil um ein stabiles Blech handelt, wie eine innere Rahmenkonstruktion. Das Verstellelement und das Positionier- und Unterstützungselement sind nun zwischen dem ersten und dem zweiten Bauteil angeordnet. Dies bedeutet, dass die Öffnung im ersten Bauteil ausreichend groß sein muss, damit sowohl das Verstellelement als auch das Positionier- und Unterstützungselement hindurch passen. Mittels des Positionier- und Unterstützungselements wird daher eine Ausricht- oder Zentrierfunktion für das Befestigungselement in der Öffnung des ersten Bauteils übernommen. Insbesondere handelt es sich bei dem Positionier- und Unterstützungselement daher um einen Zentrierrahmen, der später detailliert beschrieben wird. Die Öffnung des zweiten Bauteils ist so ausgewählt, dass der Gewindebereich das Gewindebolzens hindurch kann, nicht aber das Verstellelement. Das Verstellelement kann sich so an dem zweiten Bauteil abstützen.

Zum Toleranzausgleich wird nun das Verstellelement zunächst in Richtung des zweiten Bauteils geschraubt, bis es mit diesem in Anlage kommt. Das Schrauben des Verstellelements erfolgt mit einem geeigneten Werkzeug für das innen liegende Antriebsmittel. Bei dem innen liegenden Antriebsmittel kann es sich beispielsweise um einen Innenmehrkant und insbesondere um einen Innensechskant handeln, wobei es sich bei dem Verstellwerkzeug dann um einen hohlen Mehrkant, insbesondere einen hohlen Sechskant, handelt.

Anschließend wird das Verstellelement weiter in Richtung des zweiten Bauteils geschraubt, was dazu führt, dass das Positionier- und Unterstützungselement in Richtung des ersten Bauteils bewegt wird. Für diesen Vorgang wird vorzugsweise ein Verstellwerkzeug mit Drehmomentabschaltung verwendet, da ansonsten insbesondere das erste Bauteil ausgebeult werden kann. Das Verstellelement wird solange weiter in Richtung des zweiten Bauteils geschraubt, bis das Positionier- und Unterstützungselement benachbart dem ersten Bauteil angeordnet ist und die Toleranz zwischen dem ersten und dem zweiten Bauteil hinreichend ausgeglichen ist. Für diesen Vorgang weist das Positionier- und Unterstützungselement vorzugsweise Rastfüße auf, an denen das erste Bauteil abstützbar ist. Somit dient der Gewindebereich des Gewindebolzens in einer ersten Funktion als Verstellgewinde.

Im Anschluss an den oben beschriebenen Toleranzausgleich wird das Befestigungsmittel im Gewindebereich angeordnet, insbesondere angeschraubt. Dies sorgt für eine feste Verschraubung des Anbauteils an dem zweiten Bauteil. In einer zweiten Funktion dient der Gewindebereich des Gewindebolzens daher als Befestigungsgewinde.

Das vorliegende Befestigungselement mit Toleranzausgleichsfunktion unterscheidet sich grundlegend von den bekannten Systemen. Die bekannten Systeme verfügen zusätzlich zum Befestigungsgewinde über eine Verstellgewindepaarung. Gemäß der vorliegenden Erfindung dient aber der Gewindebereich des Gewindebolzens sowohl als Befestigungsgewinde für das Befestigungsmittel als auch als Verstellgewinde für das Verstellelement. Somit funktioniert ein Toleranzausgleich gemäß der vorliegenden Erfindung in Verbindung mit einem Gewindebolzen.

Ein Vorteil der vorliegenden Erfindung ist daher der einfachere Aufbau sowie die leichtere Handhabbarkeit im Vergleich zu Stand der Technik Lösungen. Weiterhin wirkt sich dies günstig auf die Kosten aus.

In einer bevorzugten Ausführungsform steht das Verstellelement mit dem Positionier- und Unterstützungselement in Eingriff. Auf diese Weise wird eine Transportsicherung des Verstellelements am Gewindebereich des Gewindebolzens bereitgestellt. Insbesondere kann das im Gewindebereich vorgesehene Verstellelement sich auf diese Weise nicht zufällig lösten oder abschrauben.

Weiterhin bevorzugt ist, dass das Verstellelement aus einer Haube, einem hohlzylinderförmigen Verstelloberteil sowie einem ringförmigen Verstellunterteil gebildet ist und das Verstelloberteil das passende Innengewinde sowie das Antriebsmittel aufweist. Die Haube kann aus Kunststoff hergestellt sein, während das Verstelloberteil sowie das Verstellunterteil aus einem belastbaren Material wie Stahl hergestellt sind. Diese Ausführungsform ist besonders vorteilhaft, wenn das Anbauteil eine komprimierbare Dichtung aufweist. In diesem Fall können das Verstelloberteil sowie das Verstellunterteil mit einem definierten Abstand zur Öffnung der Haube, die dem zweiten Bauteil bei Verwendung zugewandt ist, in der Haube gehalten werden. Bevorzugt erfolgt diese Haltefunktion über eine innen liegende Wulst benachbart einem zweiten axialen Ende der Haube. Die Wulst ist mit einer Seite des Verstellunterteils in Eingriff bringbar, sodass das Verstelloberteil und das Verstellunterteil in der Haube angeordnet sind. Mittels der Wulst wird das Verstellunterteil gegen das Verstelloberteil gedrückt. Das Verstelloberteil wiederum wird gegen eine Decke bzw. ein erstes axiales Ende der Haube gedrückt. Somit ist sowohl das Verstelloberteil als auch das Verstellunterteil sicher gegen Verlust in der Haube angeordnet.

Wird nun das Befestigungsmittel am Gewindebereich befestigt, dann wird das Verstelloberteil zusammen mit dem Verstellunterteil über die Wulst in Richtung des zweiten Bauteils bewegt. Am Anbauteil vorhandene komprimierbare Dichtungen werden so zusammengedrückt. Um einen optimalen Dichteffekt zu erreichen, muss der durch die Wulst vorgegebene Abstand zwischen Verstellunterteil und zweitem Bauteil sowie der durch die Komprimierung der Dichtung definierte Abstand gleich sein. Somit stellt die Haube in Verbindung mit dem Verstelloberteil und dem Verstellunterteil ein gezieltes Vorspannen der Dichtung am Anbauteil beim Anbringen des Befestigungsmittels bereit.

In einer weiteren bevorzugten Ausführungsform weist die Haube mindestens einen innen liegenden Steg an ihrem ersten axialen Ende auf und das Verstelloberteil mindestens eine Freimachung an seinem ersten axialen Ende, die mit dem mindestens einen innen liegenden Steg in Eingriff bringbar ist. Durch das Zusammenspiel zwischen Steg und Freimachung kann das Verstelloberteil drehfest in der Haube gehalten werden.

Weiterhin bevorzugt ist, dass das Verstelloberteil einen Kugelpfannenabschnitt an einem zweiten axialen Ende aufweist und das ringförmige Verstellunterteil einen Kugelabschnitt auf einer ersten Seite aufweist, der mit dem Kugelpfannenabschnitt des Verstelloberteils in Anlage bringbar ist. Das ringförmige Verstellunterteil sowie das Verstelloberteil liegen innerhalb der Haube aneinander an. Wird nun das ringförmige Verstellunterteil in radialer Richtung bezogen auf eine Längsachse des Befestigungselements verschoben, wird das ringförmige Verstellunterteil nicht nur in seitlicher Richtung bezogen auf die Längsachse des Befestigungselements versetzt, sondern auch bezogen auf die Längsachse des Befestigungselements verkippt. Die Stärke des Verkippens wird durch die Neigung des Kugelabschnitts sowie des daran angepassten Kugelpfannenabschnitts vorgegeben. Es folgt somit aus dem radialen Versatz des Verstellunterteils bezogen auf die Längsachse des Befestigungselements, das die Mittelachse des Verstellunterteils winklig zur Längsachse des Befestigungselements angeordnet ist. Somit wir ein Winkelausgleich innerhalb der Geometrie zwischen Verstelloberteil und Verstellunterteil erreicht.

Weiterhin bevorzugt ist, dass die Haube mindestens eine äußere, umfängliche Rastnase aufweist, die benachbart dem ersten axialen Ende angeordnet ist und mit dem Positionier- und Unterstützungselement in Eingriff bringbar ist. Die Rastnase dient hierbei als Transportsicherung.

Die vorliegende Erfindung umfasst ebenfalls ein Kraftfahrzeug, an dem ein Anbauteil, insbesondere eine Dachleiste, mittels des erfindungsgemäßen Befestigungselements befestigt ist. Im Hinblick auf die Anordnung und die sich daraus ergebenden Vorteil wird auf das oben zum erfindungsgemäßen Befestigungselement Gesagte verwiesen.

Weiterhin umfasst die vorliegende Erfindung ein Montageverfahren eines Anbauteils, insbesondere einer Dachleiste, mittels des erfindungsgemäßen Befestigungselements mit Toleranzausgleichsfunktion. Das Verfahren weist die folgenden Schritte auf: Anordnen des Befestigungselements an dem Anbauteil, Anordnen des Anbauteils mit Befestigungselement an einem ersten Bauteil, sodass das Positionier- und Unterstützungselement sowie das Verstellelement zwischen dem ersten und einem zweiten Bauteil angeordnet sind, Einstellen eines Abstands zwischen dem Positionier- und Unterstützungselement sowie dem Verstellelement, sodass das erste Bauteil mit dem Positionier- und Unterstützungselement und das zweite Bauteil mit dem Verstellelement in Kontakt stehen und anschließend Anbringen eines Befestigungsmittels an dem Gewindebereich des Gewindebolzens, sodass das zweite Bauteil zwischen dem Verstellelement und dem Befestigungsmittel angeordnet ist.

Unter Verwendung des oben beschriebenen Befestigungselements mit Toleranzausgleichsfunktion ist es möglich, ein Anbauteil an zwei Bauteilen zu befestigen, wobei nur ein Element verstellt werden muss.

Weiterhin bevorzugt ist, wenn beim Befestigen des Befestigungselements mit dem Befestigungsmittel eine winkelausgleichende Unterlegscheibe zwischen dem zweiten Bauteil und dem Befestigungsmittel angeordnet wird. Die winkelausgleichende Unterlegscheibe unterstützt insbesondere in Zusammenarbeit mit dem speziell ausgestaltenden Verstellelement einen Winkelausgleich.

Vorzugsweise erfolgt das Anordnen des Befestigungselements an dem Anbauteil mittels Nieten des Befestigungsbereichs an das Anbauteil. Somit ist eine sichere und dauerhafte Verbindung zwischen dem Anbauteil und dem Gewindebolzen hergestellt. Das Vernieten kann vor oder nach dem Anordnen des Verstellelements auf dem Gewindebereich des Gewindebolzens erfolgen.

Weiterhin bevorzugt ist, dass das erste Bauteil Aussparungen aufweist, in die das Positionier- und Unterstützungselemente clipsbar ist, und das zweite Bauteil Langlöcher aufweist, durch die ein Endabschnitt des Befestigungsbereichs zur Befestigung des Befestigungsmittels hervorsteht. Im Vergleich zum Stand der Technik ist somit eine aufwändige Konstruktion ausgehend von Schlüssellöchern im zweiten Bauteil und dazu passenden Löchern im ersten Bauteil nicht mehr erforderlich. Weiterhin kann das Anbauteil durch des Positionier- und Unterstützungselements sicher und zentriert in der Öffnung des ersten Bauteils angeordnet werden.

Ebenso umfasst die vorliegende Erfindung ein Demontageverfahren eines Anbauteils, insbesondere einer Dachleiste, das mittels des erfindungsgemäßen Befestigungselements mit Toleranzausgleichsfunktion an einem zweiten Bauteil befestigt ist, wobei das Positionier- und Unterstützungselement sowie das Verstellelement zwischen einem ersten und dem zweiten Bauteil angeordnet sind. Das Verfahren weist die folgenden Schritte auf: Lösen einer Befestigung des Befestigungselements, danach Anheben des Anbauteils, bis das erste Unterstützungselement mit dem ersten Bauteil in Kontakt kommt, und anschließend Entfernen des Befestigungselements mittels einer geeigneten Entfernvorrichtung.

Mithilfe des Demontageverfahrens ist es möglich, das Befestigungselement und somit das Anbauteil nachträglich zu demontieren. Insbesondere werden keine Bestandteile des Befestigungselements in dem Bereich zwischen dem ersten und dem zweiten Bauteil hinterlassen.

### 4. Kurze Beschreibung der begleitenden Zeichnungen

Unter Bezugnahme auf die begleitenden Zeichnungen wird die vorliegende Erfindung nun näher erläutert. Gleiche Bezugszeichen in den Zeichnungen bezeichnen dabei gleiche Elemente. Es zeigen:
- Figur 1: eine Seitenansicht eines Gewindebolzens und eines Positionier- und Unterstützungselements gemäß der vorliegenden Erfindung,
- Figur 2: den Gewindebolzen mit dem Positionier- und Unterstützungselement gemäß Figur 1, wobei das Positionier- und Unterstützungselement am Gewindebolzen angeordnet ist,
- Figur 3: eine perspektivische Ansicht der Anordnung gemäß Figur 1,
- Figur 4: eine perspektivische Ansicht der Anordnung gemäß Figur 2,
- Figur 5: eine perspektivische Ansicht der Anordnung gemäß Figur 2,
- Figur 6: eine erste perspektivische Ansicht des Gewindebolzens mit Positionier- und Unterstützungselement gemäß den Figuren 1 bis 5 sowie ein Anbauteil,
- Figur 7: eine zweite perspektivische Ansicht des Gewindebolzens mit Positionier- und Unterstützungselement gemäß den Figuren 1 bis 5 sowie ein Anbauteil,
- Figur 8: den Gewindebolzen mit Positionier- und Unterstützungselement sowie Anbauteil gemäß den Figuren 6 und 7, wobei das Anbauteil am Gewindebolzen befestigt ist,
- Figur 9: eine perspektivische Ansicht der Anordnung gemäß Figur 8 mit einem Verstellelement,
- Figur 10: eine perspektivische Ansicht der Anordnung gemäß den Figuren 2, 4 und 5 mit einem Verstellelement,
- Figur 11: eine perspektivische Ansicht der Anordnung gemäß Figur 9, wobei das Verstellelement im Gewindebereich angeordnet ist,
- Figur 12: eine Schnittansicht der Anordnung gemäß Figur 11,
- Figur 13: eine erste Explosionsansicht des erfindungsgemäßen Verstellelements,
- Figur 14: eine zweite Explosionsansicht des erfindungsgemäßen Verstellelements,
- Figur 15: eine Draufsicht auf das erfindungsgemäße Verstellelement
- Figur 16: einen Schnittansicht des Verstellelements entlang der Linie A-A vaus Figur 15,

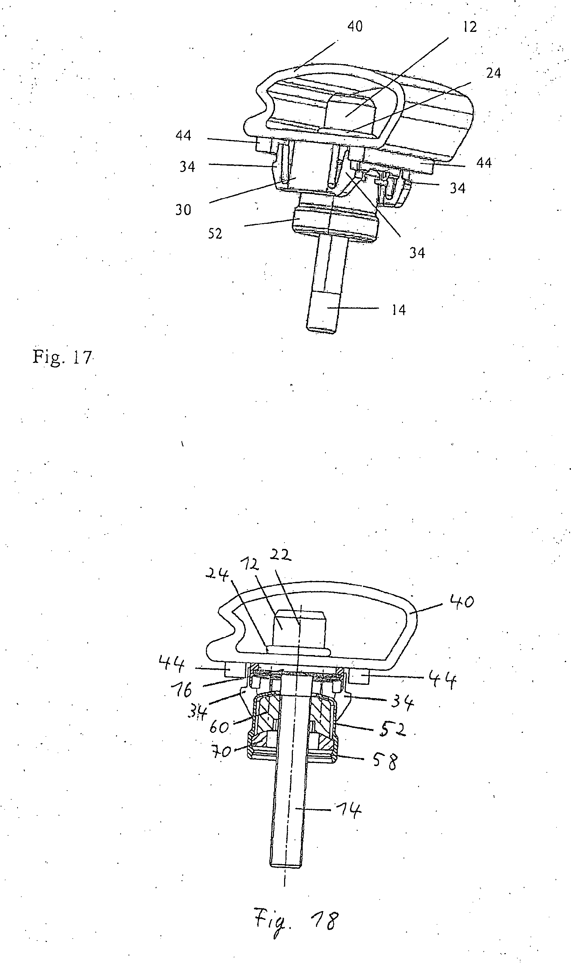

- Figur 17: eine perspektivische Ansicht der Anordnung gemäß Figur 11,
- Figur 18: eine Schnittansicht der Anordnung gemäß Figur 17,
- Figur 19: eine perspektivische Ansicht der Anordnung gemäß Figur 18 vor dem Einbau,
- Figur 20: eine Schnittansicht der Anordnung gemäß Figur 19,
- Figur 21: eine Schnittansicht der Anordnung gemäß Figur 20, wobei das Befestigungselement zwischen zwei Bauteile eingesetzt ist,
- Figur 22: eine perspektivische Ansicht der Anordnung gemäß Figur 21,
- Figur 23: eine Schnittansicht der Anordnung gemäß Figur 21 nach einem Toleranzausgleich,
- Figur 24: eine Draufsicht auf ein Antriebswerkzeug für den Toleranzausgleich,
- Figur 25: eine perspektivische Ansicht der Anordnung gemäß Figur 23,
- Figur 26: eine Seitenansicht der Anordnung gemäß Figur 25,
- Figur 27: eine Schnittansicht des befestigten Befestigungselements,
- Figur 28: eine Schnittansicht aus Figur 27 mit Darstellung der Winkelausgleichfunktion,
- Figur 29: eine perspektivische Ansicht der Anordnung gemäß Figur 27,
- Figur 30: eine Seitenansicht der Anordnung gemäß Figur 29,
- Figur 31: eine perspektivische Ansicht des Befestigungselement mit Entfernvorrichtung,
- Figur 32: einen schematischen Verfahrensablauf des erfindungsgemäßen Montageverfahrens und
- Figur 33: einen schematischen Verfahrensablauf eines erfindungsgemäßen Demontageverfahrens.

### 5. Detaillierte Beschreibung bevorzugter Ausführungsformen

Das Befestigungselement mit Toleranzausgleichsfunktion gemäß der vorliegenden Erfindung kann zur Befestigung von Anbauteilen verwendet werden. Bei solchen Anbauteilen handelt es sich beispielsweise um Dachleisten, die im Kraftfahrzeugbereich an einem Dach eines Kraftfahrzeugs befestigt werden.

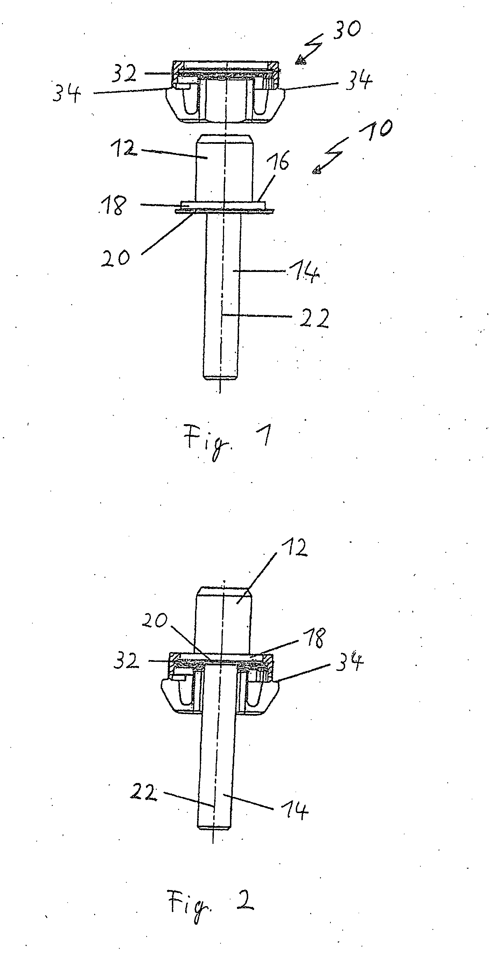

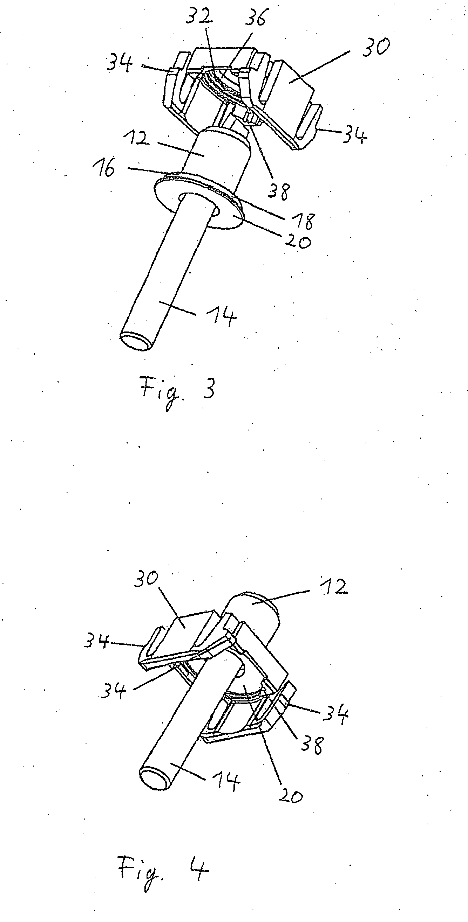

Gemäß den Figuren 1 und 3 weist das Befestigungselement einen Gewindebolzen 10 sowie ein Positionier- und Unterstützungselement 30 auf. Bei dem Gewindebolzen 10 kann es sich um eine Blindnietschraube handeln. Der Gewindebolzen 10 besteht aus einem Befestigungsbereich 12 und einem Gewindebereich 14. Zwischen dem Befestigungsbereich 12 und dem Gewindebereich 14 ist ein Vorsprung 16 vorgesehen.

Der Vorsprung 16 besteht aus einem ersten Bereich 18 und einem zweiten Bereich 20. Insbesondere erstreckt sich der Vorsprung 16 umfänglich um den Gewindebolzen 10. Der erste Bereich 18 weist einen kleineren Radius als der zweite Bereich 20 auf und der erste Berech 18 ist benachbart dem Befestigungsbereich 12 angeordnet, während der zweite Bereich 20 benachbart des Gewindebereichs 14 angeordnet ist. Auf diese Weise ergibt sich zwischen dem ersten 18 und dem zweiten Bereich 20 eine Abstufung. Weiterhin ist der Befestigungsbereich 12 im Durchmesser größer als der Gewindebereich 14. Eine mittige Längsachse des Gewindebolzens 10 ist mit 22 gekennzeichnet.

Das Positionier- und Unterstützungselement 30 weist eine rechteckige Grundform auf. Es ist vorzugsweise aus einem Kunststoff gefertigt und verfügt über eine Ringnut 32, die mit dem Vorsprung 16 des Gewindebolzens 10 in Eingriff bringbar ist. Weiterhin verfügt das Positionier- und Unterstützungselement über vier Rastfüße 34. Die Rastfüße 34 sind nachgiebig am Grundkörper des Positionier- und Unterstützungselements 30 angeordnet. Dies kann beispielsweise über einen schmalen Steg erfolgen. Auf einer Innenseite bzw. dem Befestigungsbereich 12 des Gewindebolzens 10 zugewandten Seite verfügt das Positionier- und Unterstützungselement 30 über eine Vertiefung 38. Insbesondere ist in jedem Eckbereich des Positionier- und Unterstützungselements 30 eine Vertiefung 38 vorgesehen. Die Vertiefung 38 dient später als Transportsicherung für ein Verstellelement 50, was weiter unten beschrieben wird. Bei dem Positionier- und Unterstützungselement handelt es sich insbesondere um einen Zentrierrahmen. Die Funktion Positionier- und Unterstützungselements bzw. des Zentrierrahmens wird weiter unten bei der Beschreibung des Montageverfahrens genauer beschrieben.

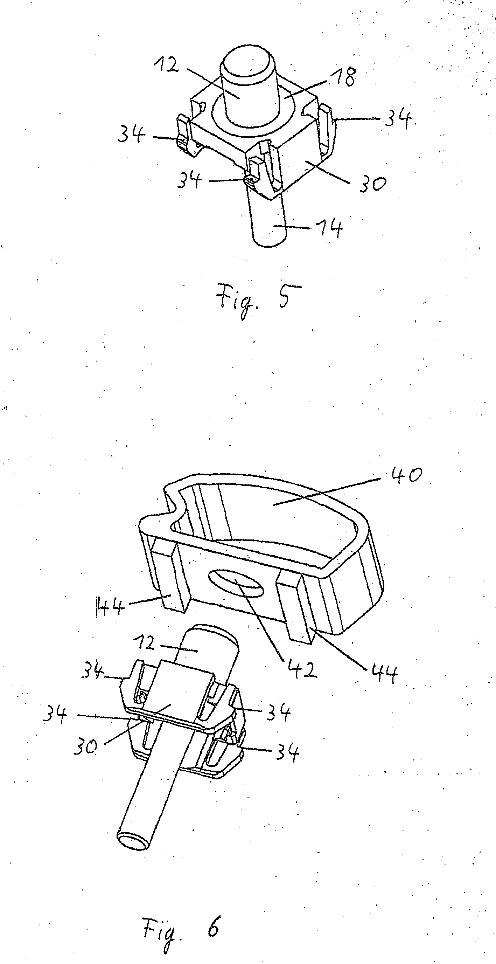

Das Positionier- und Unterstützungselement 30 wird auf den Gewindebolzen 10 geschoben, bis die Ringnut 32 mit dem Vorsprung 16 in Eingriff steht. Dies ist in den Figuren 2, 4 und 5 dargestellt. Weiterhin weist das Positionier- und Unterstützungselement 30 eine Anlagefläche 36 auf, die mit einer Fläche des zweiten Bereichs 20 des Vorsprungs 16 in Eingriff steht. In Figur 5 ist dargestellt, dass der Vorsprung 16 formschlüssig mit der Ringnut 32 des Positionier- und Unterstützungselements 30 zusammenarbeitet. Insbesondere rastet der Vorsprung 16 in der Ringnut 32 ein. Der erste Bereich 18 des Vorsprungs 16 schließt bündig mit einer Oberfläche des Zentrierrahmens 30 ab, wie in Figur 5 dargestellt.

Nachdem das Positionier- und Unterstützungselement auf dem Vorsprung 16 des Gewindebolzens 10 angeordnet wurde, kann entweder das Verstellelement 50 am Gewindebereich 14 des Gewindebolzens 10 oder ein Anbauteil 40 am Befestigungsbereich 12 des Gewindebolzens 10 angeordnet werden. Zunächst wird auf die Anordnung des Anbauteils 40 am Befestigungsbereich 12 des Gewindebolzens 10 eingegangen.

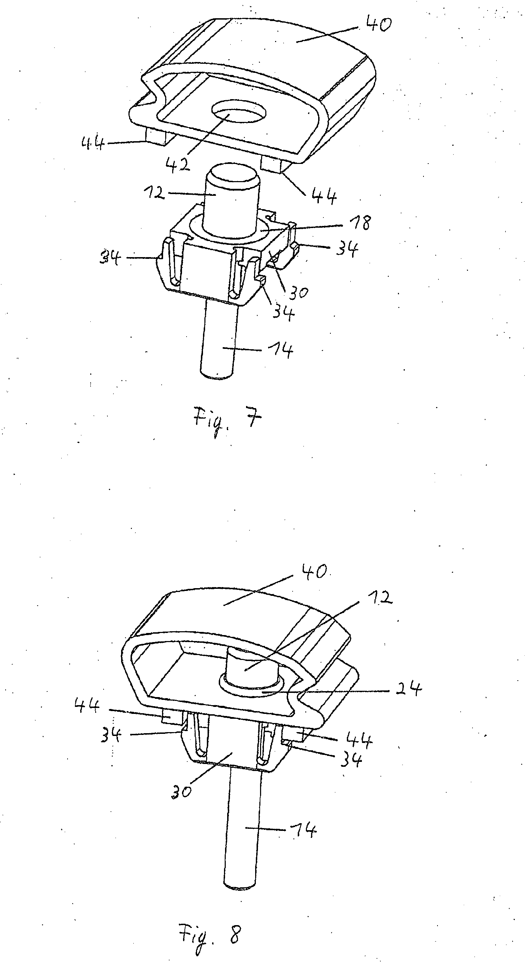

Bei diesem Anbauteil 40 kann es sich um eine Dachleiste handeln, üblicherweise ein Stangenpressprofil aus Leichtmetall. Das Anbauteil 40 weist eine Mehrzahl von Bohrungen 42 auf, von denen in den Figuren 6 und 7 nur eine dargestellt ist. Die Bohrung 42 des Anbauteils 40 und der Befestigungsbereich 12 des Gewindebolzens 10 werden nachfolgend miteinander in Eingriff gebracht, siehe Figuren 8. Dies geschieht insbesondere mittels Einnieten des Befestigungsbereichs 12 in das Anbauteil 40. Zwischen dem Anbauteil 40 und dem Befestigungsbereich 12 entsteht auf diese Weise eine metallische Verbindung. Im Inneren des Anbauteils 40 bildet sich aufgrund des Einnietens eine Wulst 24 aus. Der Befestigungsbereich 12 ist somit fest mit dem Anbauteil 40 verbunden. Weiterhin ist das Positionier- und Unterstützungselement verliersicher zwischen dem Vorsprung 16 und einer dem Vorsprung 16 zugewandten Seite des Anbauteils 40 gehalten.

Weiterhin verfügt das Anbauteil 40 über zwei parallel verlaufende Dichtungen 44 an seiner dem Positionier- und Unterstützungselement 30 zugewandten Seite. Bei den Dichtungen 44 handelt es sich um komprimierbare Dichtungen, die beispielsweise mittels einer Klebeverbindung am Anbauteil 40 befestigt sind. Wie ebenfalls in Figur 8 dargestellt wird die richtige Lage des Positionier- und Unterstützungselements 30 mit Hilfe der Dichtungen 44 realisiert, die mit den Rastfüßen 34 in Eingriff stehen. Werden keine Dichtungen verwendet, so kann die Funktion durch eine entsprechende Nut am Anbauteil 40 wahrgenommen werden, die mit einem Steg am Positionier- und Unterstützungselement 30 in Eingriff steht.

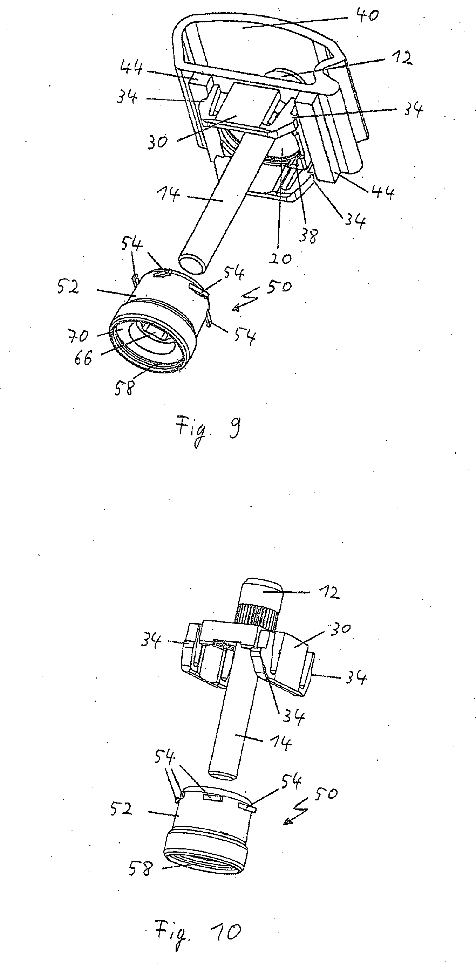

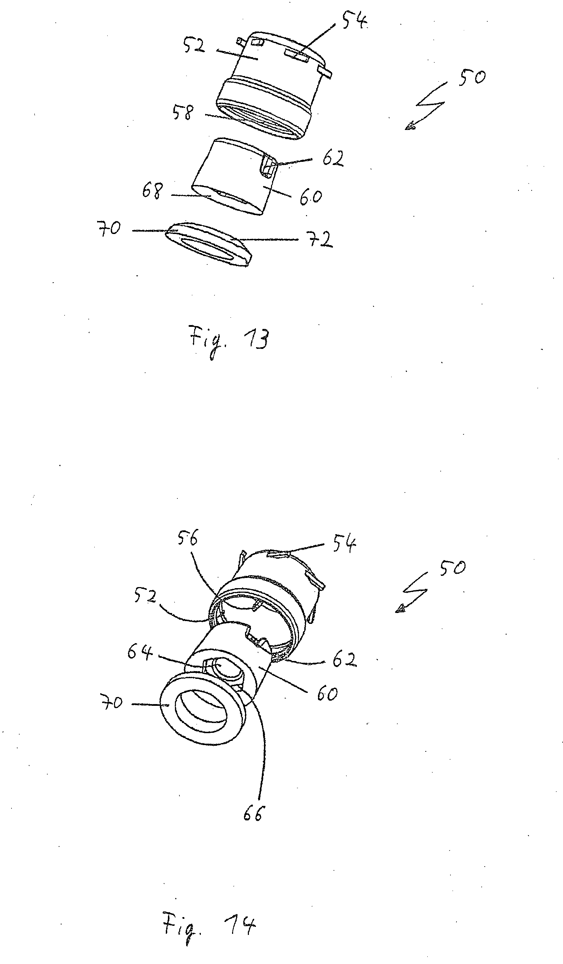

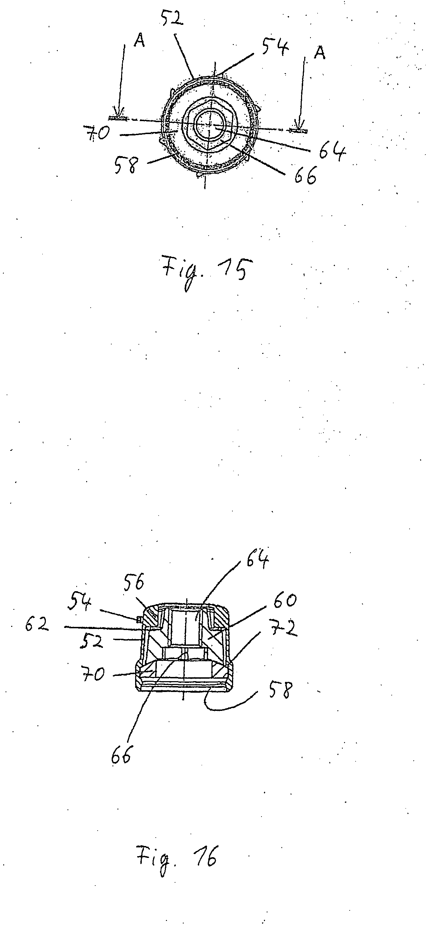

In den Figuren 9 und 10 ist zusätzlich ein Verstellelement 50 dargestellt. Wie oben bereits dargelegt, kann das Verstellelement 50 nach dem Anordnen des Anbauteils 40 (Fig. 9) oder vor dem Anordnen des Anbauteils 40 (Fig. 10) an dem Gewindebolzen 10 angeordnet werden. Der detaillierte Aufbau des Verstellelements 50 wird weiter unten mit Bezug auf die Figuren 13-16 beschrieben.

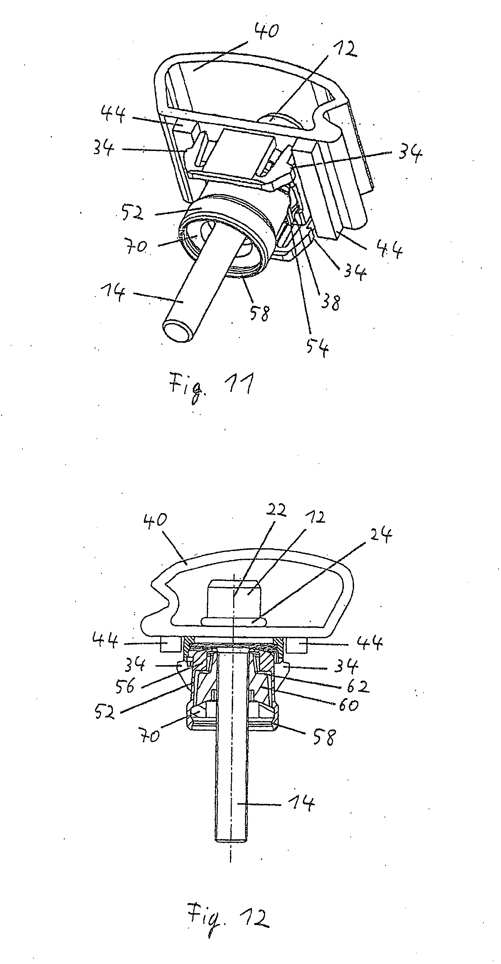

Das Verstellelement 50 wird auf den Gewindebereich 14 des Gewindebolzens 10 aufgeschraubt. Hierzu verfügt das Verstellelement 50 über ein Innengewinde. Weiterhin kann das Verstellelement 50 an einer radial außen liegenden Seite Vorsprünge oder Ratsnasen 54 aufweisen, die mit den Vertiefungen 38 des Positionier- und Unterstützungselement 30 in Eingriff bringbar sind. Ein Aufschrauben des Verstellelements 50 erfolgt vorzugsweise, bis eine erste Rastnase 54 in einer der Vertiefungen 38 radial anschlägt und einrastet. Dies stellt die Transportsicherung dar. In der Figur 11 ist eine perspektivische Ansicht und in Figur 12 eine Schnittansicht des Gewindebolzens 10 mit darauf angeordnetem Positionier- und Unterstützungselement 30 sowie Verstellelement 50 und dem Anbauteil 40 dargestellt.

Bezugnehmend auf die Figuren 12 bis 16 wird im Folgenden das Verstellelement 50 beschrieben. Das Verstellelement 50 besteht aus einer Haube 52, einem Verstelloberteil 60 sowie einem Verstellunterteil 70. Die Haube 52 ist vorzugsweise aus Kunststoff hergestellt. Das Verstelloberteil 60 sowie das Verstellunterteil 70 sind aus Stahl oder einem anderen geeigneten Metall hergestellt.

Das Verstelloberteil 60 ist hohlzylinderförmig und weist das Innengewinde auf, das zum Gewindebereich 14 des Gewindebolzens 10 passt. Wie in den Figuren 13 und 14 ersichtlich verfügt das Verstelloberteil 60 weiterhin über einen Kugelpfannenabschnitt 68 der mit einem Kugelabschnitt 72 des Verstellunterteils 70 zusammenwirkt. Das Verstellunterteil 70 ist vorzugsweise ringförmig und weist eine Bohrung in der Mitte auf, so dass es auf den Gewindebereich 14 des Gewindebolzens 10 schiebbar ist. Die dem Kugelabschnitt 72 gegenüberliegende Seite des Verstellunterteils 70 ist eben ausgeführt. Das Zusammenwirken des Kugelpfannenabschnitts 68 und des Kugelabschnitts 72 dient zum Winkelausgleich, wie später beschrieben wird.

Die Haube 52 weist an ihrem ersten axialen Ende bzw. ihrer Decke eine Öffnung auf, so dass die Haube 52 über den Gewindebereich 14 des Gewindebolzens 10 schiebbar ist. An ihrem zweiten axialen Ende ist die Haube 52 offen. Die Haube 52 weist zwei sich einander gegenüberliegende Stege 56 auf. Das Verstelloberteil 60 verfügt über zwei Freimachungen 62, die mit den Stegen 56 in Eingriff bringbar sind. Das Verstelloberteil 60 wird nun in die Haube 52 eingeführt, bis die Stege 56 mit den Freimachungen 62 in Eingriff stehen. Auf diese Weise wird das Verstelloberteil 60 gegen ein Verdrehen in der Haube 52 gesichert.

Anschließend wird das Verstellunterteil 70 in der Haube 52 angeordnet. Hierzu ist eine innen liegende Wulst 58 in der Haube 52 vorgesehen, die das Verstellunterteil 70 in der Haube 52 hält. Weiterhin weist die Haube einen innen liegenden Vorsprung auf, an dem der Kugelabschnitt 72 in diesem Zustand anliegt. Ebenso liegt das Verstellunterteil 70 mit seinem Kugelabschnitt 72 am Kugelpfannenabschnitt 68 des Verstelloberteils 60 an. Somit werden das Verstelloberteil 60 und das Verstellunterteil 70 durch die Wulst 58 im Inneren der Haube 52 gehalten.

Weiterhin verfügt das Verstelloberteil 60 über ein radial innen liegendes Antriebsmittel 66. Im dargestellten Beispiel ist dies ein Innensechskant. Mit Hilfe des Antriebsmittels 66 wird ein gewünschter Abstand zwischen dem Positionier- und Unterstützungselement 30 sowie dem Verstellelement 50 für einen Toleranzausgleich eingestellt.

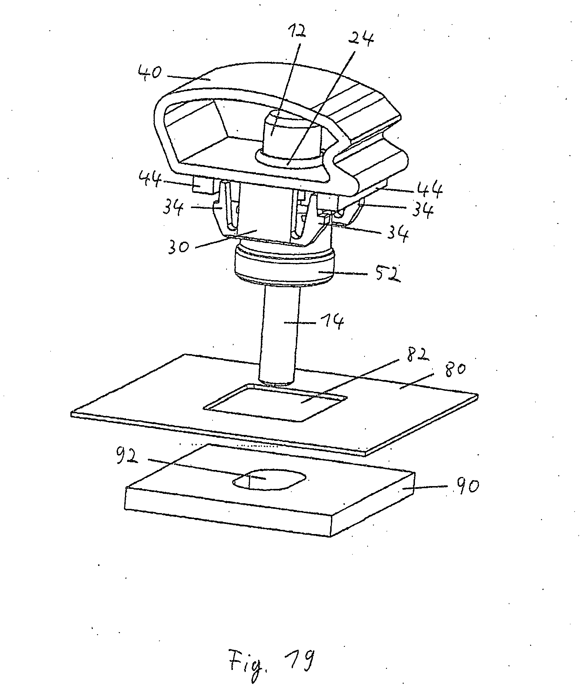

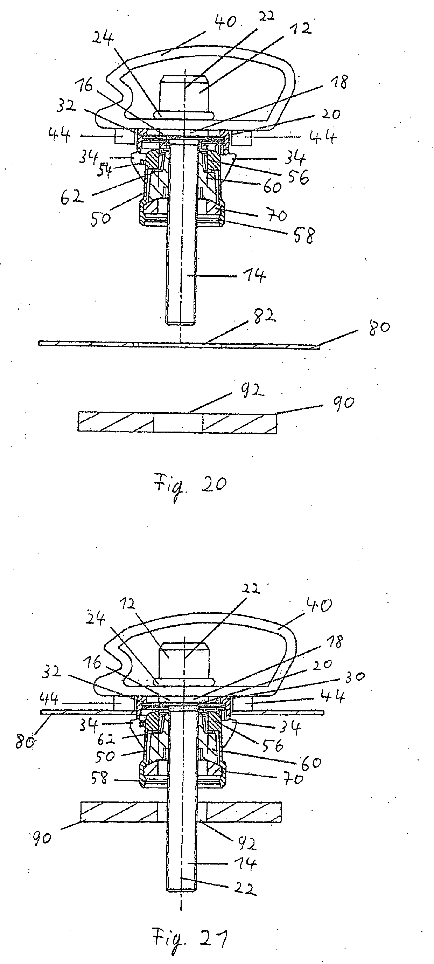

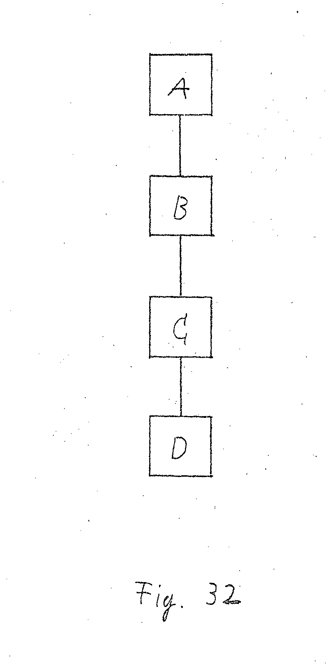

Unter Bezugnahme auf die Figuren 19 und 20 sowie den schematischen Verfahrensablauf in Figur 32 wird das erfindungsgemäße Montageverfahren nun detailliert beschrieben. Zunächst wird der mit dem Positionier- und Unterstützungselement 30 ausgestattete Gewindebolzen 10 an dem Anbauteil 40 befestigt, insbesondere eingenietet. Dies geschieht für jede Bohrung 42 in dem Anbauteil 40. Anschließend wird das Verstellelement am Gewindebereich 14 des Gewindebolzens 10 angeordnet. Alternativ kann auch vor dem Befestigen am Anbauteil 40 der Gewindebereich 14 mit dem Verstellelement 50 ausgerüstet werden.

Nachdem das Befestigungselement in Schritt A an dem Anbauteil 40 angeordnet wurde, wird das Anbauteil 40 an einem ersten Bauteil 80 angeordnet. Das erste Bauteil 80 ist beispielsweise die Dachhaut eines Kraftfahrzeugs. Da das erste Bauteil üblicherweise ein im Vergleich zum zweiten Bauteil 90 sehr dünnes Bauteil ist, sollte das erste Bauteil 80 keine Befestigungskräfte für die Befestigung des Anbauteils 40 aufnehmen. Das erste Bauteil 80 verfügt über Öffnungen 82, vorzugsweise Rechteckstanzungen.

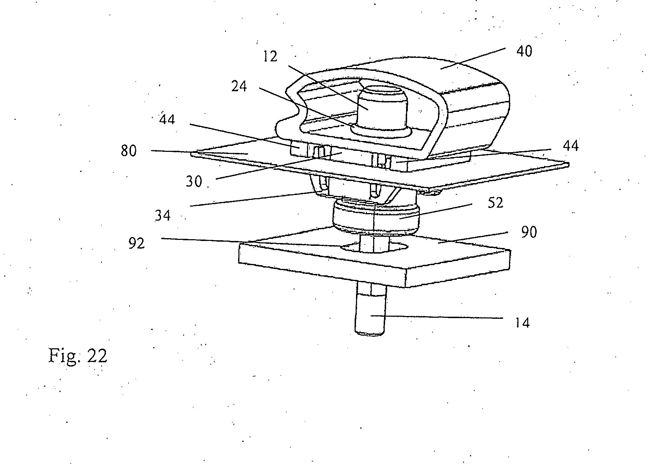

Das Anbauteil 40 wird mit dem Befestigungselement durch die Öffnung 82 und in eine Öffnung 92 in einem zweiten Bauteil 90 gesteckt. Die Öffnung 92 des zweiten Bauteils 90 ist vorzugsweise ein Langloch. Bei dem zweiten Bauteil 90 handelt es sich beispielsweise um ein Innenblech eines Kraftfahrzeugs oder eine Rahmenkonstruktion. Das Einstecken des Befestigungselements erfolgt so, dass das Positionier- und Unterstützungselement 30 sowie das Verstellelement 50 in einem Zwischenraum zwischen dem ersten Bauteil 80 und dem zweiten Bauteil 90 angeordnet sind, siehe Figur 21 und 22. Hierbei kommen die Dichtungen 44 ohne Belastung mit dem ersten Bauteil 80 in Anlage.

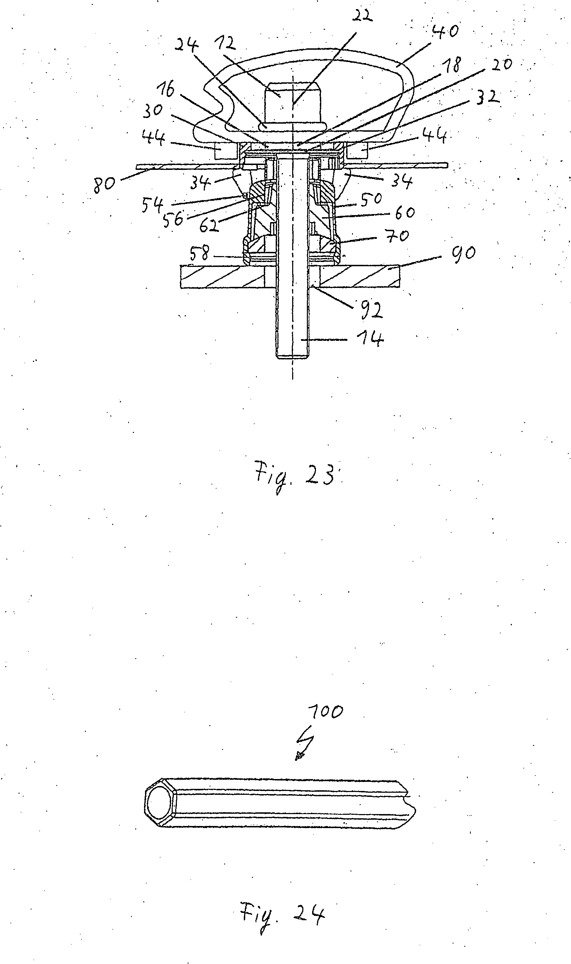

Mithilfe des in Figur 24 dargestellten Werkzeugs 100 wird das Verstelloberteil 60 nach unten in Richtung des zweiten Bauteils 90 geschraubt, bis die Haube 52 am zweiten Bauteil 90 anliegt. Das Werkzeug 100 ist vorliegend als Sechskant ausgebildet, der eine Freimachung für den Gewindebereich 14 des Gewindebolzens 10 aufweist.

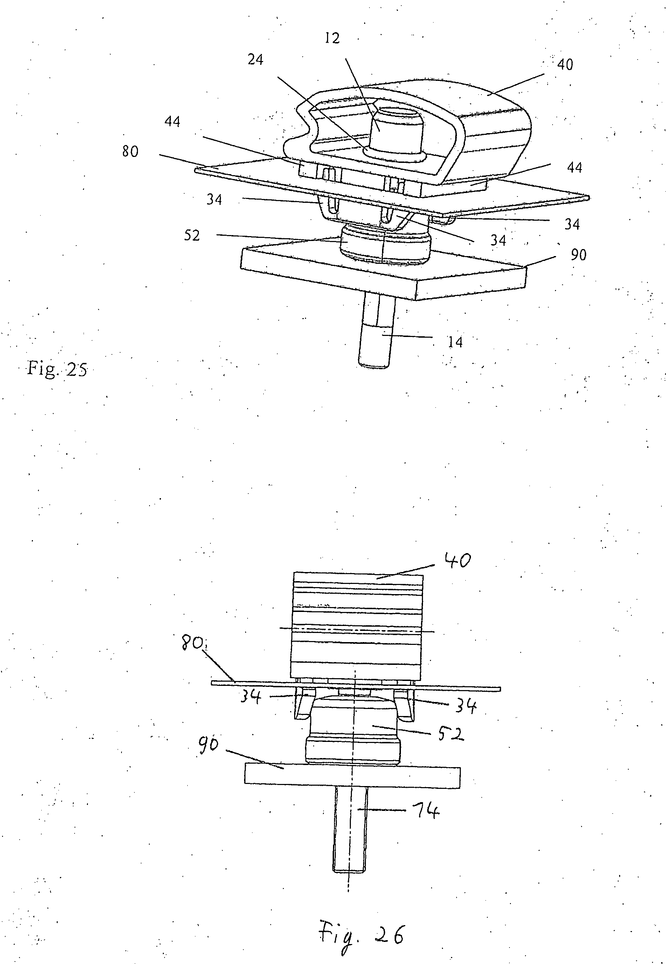

Beim Weiterschrauben hebt sich das Anbauteil 40 mit seinen Dichtungen 44 von dem ersten Bauteil 80 ab. Dies geschieht solange, bis die Rastfüße 34 des Positionier- und Unterstützungselements 30 mit dem ersten Bauteil 80 in Anlage kommen, siehe Figuren 23, 25 und 26. Die Rastfüße des Positionier- und Unterstützungselements 30 sorgen daher für eine Ausrichtung oder Zentrierung des Gewindebolzens 10 in der Öffnung 82 des ersten Bauteils 80. Hierbei ergibt sich ein spürbarer Widerstand, wenn die Rastfüße 34 gegen das erste Bauteil 80 drücken. Die Anlage der Haube 52 an dem zweiten Bauteil 90 ist im Gegensatz dazu jedoch kaum spürbar, wenn das Anbauteil nur ein geringes Gewicht hat, wie die vorliegende Dachleiste. Bevorzugt ist daher, dass das Werkzeug 100 über eine Drehmomentabschaltung verfügt, damit das erste Bauteil 80 nicht verformt wird. Auf diese Weise ist der Abstand zwischen dem ersten Bauteil und dem zweiten Bauteil ausgeglichen (Schritt C).

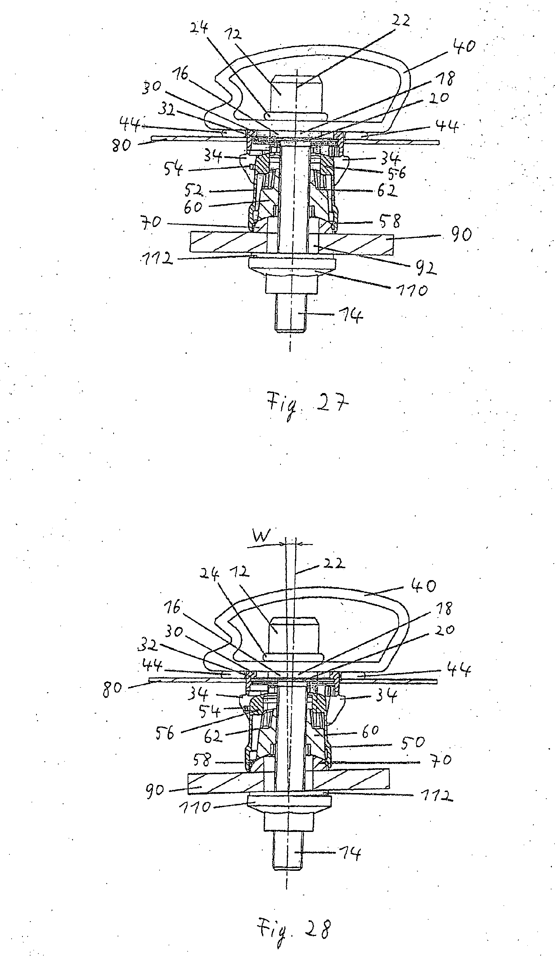

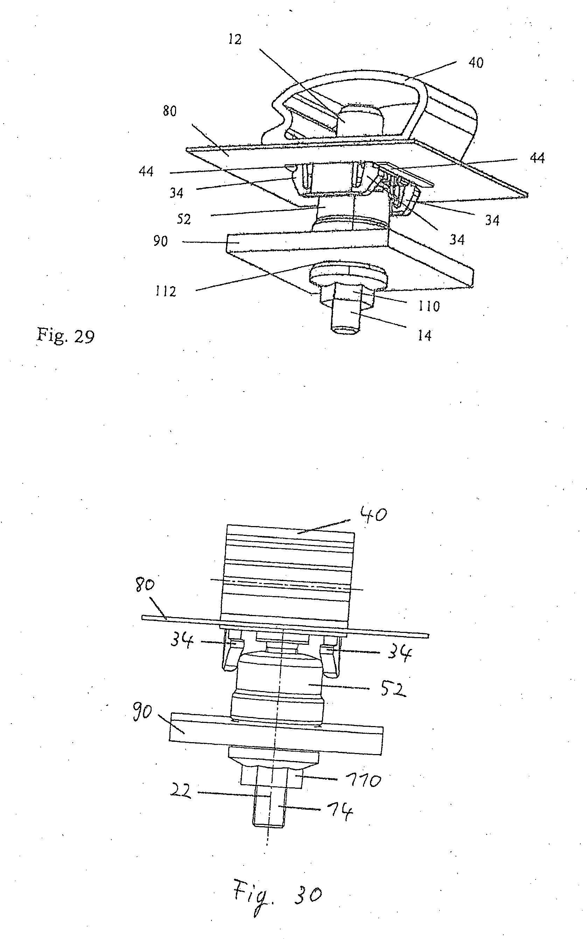

Wie in den Figur 27 bis 30 dargestellt, wird durch Aufdrehen (Schritt D) des Befestigungsmittels der Gewindebolzen 10 mit Verstelloberteil 60 und Verstellunterteil 70 nach unten gezogen. Das Verstellunterteil 70 wird durch das Verstelloberteil 60 über die Wulst 58 der Haube 52 gedrückt, bis das Verstellunterteil 70 am zweiten Bauteil 90 zur Anlage kommt. Durch diesen Vorgang werden die Dichtungen des Anbauteils 40 komprimiert. Anbauteil 40 und erstes Bauteil 80 sind somit auf den gewünschten Abstand gebracht. Das gewünschte Abstandsmaß wird durch die Wulst 58 in der Haube 52 definiert.

Durch das Anziehen des Befestigungsmittels 110, hier eine Befestigungsmutter, wird das Verstelloberteil 60 mit dem Befestigungsmittel 110 auf dem Gewindebolzen 10 verspannt. Es entsteht eine hochfeste Verschraubung. Weiterhin ist auf diese Weise das Anbauteil 40 am im Vergleich zum ersten Bauteil 80 stabilen zweiten Bauteil 90 befestigt. Das erste Bauteil 80 dient lediglich als Führung und muss an Kräften ausschließlich den Dichtungsdruck aufnehmen.

Sollten das erste Bauteil 80 und das zweite Bauteil 90 nicht parallel zueinander sein, kann dies durch das erfindungsgemäße Befestigungselement ausgeglichen werden. Der ringförmige Kugelpfannenabschnitt 68 des Verstelloberteils 60 kann sich auf dem ringförmigen Kugelabschnitt 72 des Verstellunterteils 70 in alle Richtungen bewegen und einen maximalen Winkel W ausgleichen. Dies ist möglich, nachdem das Verstellunterteil 70 mit dem zweiten Bauteil 90 in Anlage gebracht wurde. Weiterhin ist in diesem Fall die Verwendung einer Winkel ausgleichenden Unterlegscheibe 112 bevorzugt.

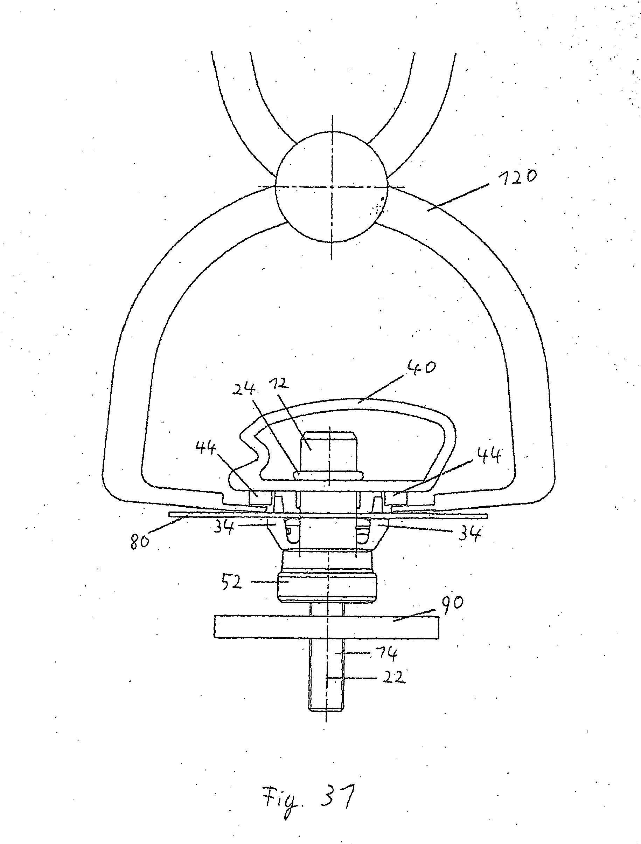

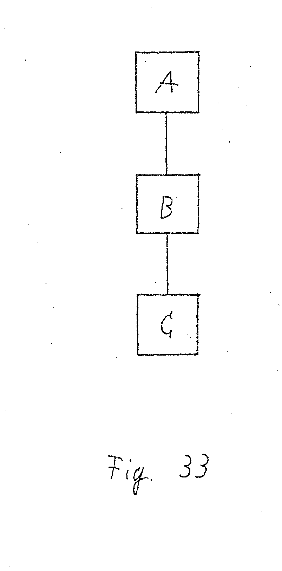

Unter Bezugnahme auf die Figuren 31 und 33 wird im Folgenden das erfindungsgemäße Demontageverfahren erläutert. In Schritt A wird eine Befestigung des Befestigungselements gelöst. Hierzu wird das Befestigungsmittel 110 abgeschraubt. Anschließend wird in Schritt B das Anbauteil 40 angehoben, bis das Positionier- und Unterstützungselement 30 mit dem ersten Bauteil 80 in Kontakt kommt. Hierbei kommen die Rastfüße 34 des Positionier- und Unterstützungselements 30 mit dem ersten Bauteil 80 in Anlage. Zwischen den Dichtungen 44 und dem ersten Bauteil 80 entsteht ein Spalt. Durch diesen Spalt wird mithilfe einer geeigneten Entfernvorrichtung 120 das Befestigungselement entfernt. Beispielsweise werden die Rastfüße 34 des Positionier- und Unterstützungselements 30 mittels einer speziell geformten Spitze einer Entfernzange zusammengedrückt. Auf diese Weise kann eine nach der anderen Verbindung gelöst werden und ein Anbauteil vollständig entfernt werden.

### Bezugszeichenliste

- 10: Gewindebolzen
- 12: Befestigungsbereich
- 14: Gewindebereich
- 16: Vorsprung
- 18: erster Bereich
- 20: zweiter Bereich
- 22: Längsachse
- 24: Wulst
- 30: Positionier- und Unterstützungselement
- 32: Ringnut
- 34: Rastfüße
- 36: Anlagefläche
- 38: Vertiefung
- 40: Anbauteil
- 42: Bohrung
- 44: Dichtung
- 50: Verstellelement
- 52: Haube
- 54: Rastnase
- 56: Steg
- 58: Wulst
- 60: Verstelloberteil
- 62: Freimachung
- 64: Bohrung
- 66: Antriebsmittel
- 68: Kugelpfannenabschnitt
- 70: Verstellunterteil
- 72: Kugelabschnitt
- 80: erstes Bauteil
- 82: Öffnung
- 90: zweites Bauteil
- 92: Öffnung
- 100: Werkzeug
- 110: Befestigungsmittel
- 112: Unterlegscheibe
- 120: Entfernvorrichtung

## Patentansprüche

1. Ein Befestigungselement mit Toleranzausgleichsfunktion zur Befestigung von Anbauteilen (40), insbesondere Dachleisten, das die folgenden Merkmale aufweist:
a) einen Gewindebolzen (10) mit einem Befestigungsbereich (12) für ein Anbauteil (40), einem Gewindebereich (14) sowie einem radialen Vorsprung (16) zwischen dem Befestigungsbereich (12) und dem Gewindebereich (14),
b) ein Positionier- und Unterstützungselement (30), das benachbart des Befestigungsbereichs an dem Gewindebolzen (10) angeordnet ist und sich am Vorsprung (16) abstützt,
c) ein Verstellelement (50), das im Gewindebereich (14) angeordnet ist, sodass ein Abstand zum Positionier- und Unterstützungselement (30) einstellbar ist, und ein zu dem Gewindebereich (14) passendes Innengewinde sowie ein Antriebsmittel (66) aufweist, wobei das Antriebsmittel (66) radial innen liegend angeordnet ist, und
d) ein Befestigungsmittel (110), das im Gewindebereich (14) benachbart zum Verstellelement (50) angeordnet ist.

2. Befestigungselement gemäß Patentanspruch 1, wobei das Verstellelement (50) mit dem Positionier- und Unterstützungselement (30) in Eingriff steht.

3. Befestigungselement gemäß einem der vorhergehenden Patentansprüche, wobei das Verstellelement (50) aus einer Haube (52), einem hohlzylinderförmigen Verstelloberteil (60) sowie einem ringförmigen Verstellunterteil (70) gebildet ist und das Verstelloberteil (60) das passende Innengewinde sowie das Antriebsmittel (66) aufweist.

4. Befestigungselement gemäß Patentanspruch 3, wobei die Haube (52) mindestens einen innen liegenden Steg (56) benachbart einem ersten axialen Ende aufweist und das Verstelloberteil (60) mindestens eine Freimachung (62) an einem ersten axialen Ende aufweist, die mit dem mindestens einen innen liegenden Steg (56) in Eingriff bringbar ist.

5. Befestigungselement gemäß einem der Patentansprüche 3-4, wobei das Verstelloberteil (60) einen Kugelpfannenabschnitt (68) an einem zweiten axialen Ende aufweist und das ringförmige Verstellunterteil (70) einen Kugelabschnitt (72) auf einer ersten Seite aufweist, der mit dem Kugelpfannenabschnitt (68) des Verstelloberteils (60) in Anlage bringbar ist.

6. Befestigungselement gemäß einem der Patentansprüche 3-5, wobei die Haube (52) eine innen liegende Wulst (58) benachbart einem zweiten axialen Ende aufweist, wobei die Wulst (58) mit einer zweiten Seite des ringförmigen Verstellunterteils (70) in Eingriff bringbar ist, so dass das Verstelloberteil (60) und das Verstellunterteil (70) in der Haube (52) anordenbar sind.

7. Befestigungselement gemäß einem der Patentansprüche 3-6, wobei die Haube (52) mindestens eine äußere, umfängliche Rastnase (54) aufweist, die benachbart dem ersten axialen Ende angeordnet ist und mit dem Positionier- und Unterstützungselement (30) in Eingriff bringbar ist.

8. Befestigungselement gemäß einem der vorhergehenden Patentansprüche, wobei das Positionier- und Unterstützungselement (30) ein Zentrierrahmen ist.

9. Befestigungselement gemäß einem der vorhergehenden Patentansprüche, wobei das Positionier- und Unterstützungselement (30) Rastfüße (34) aufweist.

10. Befestigungselement gemäß einem der vorhergehenden Patentansprüche, wobei das Antriebsmittel (66) ein Innenmehrkant ist, insbesondere Innensechskant.

11. Befestigungselement gemäß einem der vorhergehenden Patentansprüche, wobei der Gewindebolzen (10) eine Blindnietschraube ist.

12. Ein Kraftfahrzeug, an dem ein Anbauteil (40), insbesondere eine Dachleiste, mittels eines Befestigungselements mit Toleranzausgleichsfunktion gemäß einem der Patentansprüche 1 bis 11 befestigt ist.

13. Ein Montageverfahren eines Anbauteils (40), insbesondere einer Dachleiste, mittels des Befestigungselementes mit Toleranzaugleichsfunktion gemäß einem der Patentansprüche 1 bis 11, das die folgenden Schritte aufweist:
a) Anordnen (A) des Befestigungselements an dem Anbauteil (40),
b) Anordnen (B) des Anbauteils (40) mit Befestigungselement an einem ersten Bauteil (80), so dass das Positionier- und Unterstützungselement (30) sowie das Verstellelement (50) zwischen dem ersten (80) und einem zweiten Bauteil (90) angeordnet sind,
c) Einstellen (C) eines Abstands zwischen dem Positionier- und Unterstützungselement (30) sowie dem Verstellelement (50), so dass das erste Bauteil (80) mit dem Positionier- und Unterstützungselement (30) und das zweite Bauteil (90) mit dem Verstellelement (50) in Kontakt stehen und anschließend
d) Anbringen (D) eines Befestigungsmittels (110) an dem Gewindebereich (14) des Gewindebolzens (10), so dass das zweite Bauteil (90) zwischen dem Verstellelement (50) und dem Befestigungsmittel (110) angeordnet ist.

14. Montageverfahren eines Anbauteils (40) gemäß Patentanspruch 13, wobei beim Anbringen (D) des Befestigungselements eine winkelausgleichende Unterlegscheibe (112) zwischen dem zweiten Bauteil (90) und dem Befestigungsmittel (110) angeordnet wird.

15. Montageverfahren eines Anbauteils (40) gemäß einem der Patentansprüche 13-14, wobei das Anordnen (A) des Befestigungselements an dem Anbauteil (40) mittels Nieten des Befestigungsbereichs (12) an das Anbauteil (40) erfolgt.

16. Montageverfahren eines Anbauteils (40) gemäß einem der Patentansprüche 13-15, wobei das erste Bauteil (80) mindestens eine Öffnung (82) aufweist, in die das Positionier- und Unterstützungselement (30) clipsbar ist, und das zweite Bauteil (90) Öffnungen (92) aufweist, durch die ein Endabschnitt des Gewindebereichs (14) zur Anordnung des Befestigungsmittels (110) hervorsteht.

17. Ein Demontageverfahren eines Anbauteils (40), insbesondere einer Dachleiste, das mittels des Befestigungselementes mit Toleranzausgleichsfunktion gemäß einem der Patentansprüche 1 bis 8 an einem zweiten Bauteil (90) angeordnet ist, wobei das Positionier- und Unterstützungselement (30) sowie das Verstellelement (50) zwischen einem ersten (80) und dem zweiten Bauteil (90) angeordnet sind, wobei das Verfahren die folgenden Schritte aufweist:
a) Lösen (A) einer Befestigung des Befestigungselements, danach
b) Anheben (B) des Anbauteils (40), bis das Positionier- und Unterstützungselement (30) mit dem ersten Bauteil (80) in Kontakt kommt, und anschließend
c) Entfernen (C) des Befestigungselements mittels einer geeigneten Entfernvorrichtung (120).

## Claims

1. A fastening element with tolerance-compensation function for fastening add-on elements (40), in particular roof rails, comprising the following features:
a) a threaded bolt (10) having a fastening portion (12) for an add-on element (40), a threaded portion (14) as well as a radial projection (16) between fastening portion (12) and threaded portion (14),
b) a positioning and supporting element (30) arranged at the threaded bolt (10) adjacent to the fastening region and abutting the projection (16),
c) an adjusting element (50) arranged in the threaded portion (14) so that a distance relative to the positioning and supporting element (30) is adjustable, and which comprises an inner thread matching with the threaded portion (14) as well as a drive means (66), wherein the drive means (66) is arranged radially inside, and
d) a fastening means (110) arranged in the threaded portion (14) adjacent to the adjusting element (50).

2. Fastening element according to claim 1, wherein the adjusting element (50) is in engagement with the positioning and supporting element (30).

3. Fastening element according to one of the preceding claims, wherein the adjusting element (50) is formed by a cap (52), a hollow cylindrically shaped adjusting top part (60), as well as by an annular adjusting bottom part (70), and the adjusting top part (60) comprises the matching inner thread as well as the drive means (66).

4. Fastening element according to claim 3, wherein the cap (52) comprises at least one interior web (56) adjacent to a first axial end, and the adjusting top part (60) comprises at least one clearing (62) at a first axial end which is engageable with the at least one interior web (56).

5. Fastening element according to one of the claims 3 to 4, wherein the adjusting top part (60) comprises a ball socket section (68) at a second axial end, and the annular adjusting bottom part (70) comprises a ball section (72) on a first side which can be brought into contact with the ball socket section (68) of the adjusting top part (60).

6. Fastening element according to one of the claims 3 to 5, wherein the cap (52) comprises an interior bead (58) adjacent to a second axial end, wherein the bead (58) is engageable with a second side of the annular adjusting bottom part (70) so that the adjusting top part (60) and the adjusting bottom part (70) can be arranged in the cap (52).

7. Fastening element according to one of the claims 3 to 6, wherein the cap (52) comprises at least one outer circumferential snap-in nose (54) arranged adjacent to the first axial end, and which is engageable with the positioning and supporting element (30).

8. Fastening element according to one of the preceding claims, wherein the positioning and supporting element (30) is a centering frame.

9. Fastening element according to one of the preceding claims, wherein the positioning and supporting element (30) comprises snap-in feet (34).

10. Fastening element according to one of the preceding claims, wherein the drive means (66) is a polygon socket, in particular a hexagon socket.

11. Fastening element according to one of the preceding claims, wherein the threaded bolt (10) is a blind rivet screw.

12. A motor vehicle to which an add-on element (40), in particular a roof rail, is fastened by means of a fastening element with tolerance-compensation function according to one of the claims 1 to 11.

13. An installation method of an add-on element (40), in particular a roof rail, by means of the fastening element with tolerance-compensation function according to one of the claims 1 to 11, comprising the following steps:
a) arranging (A) the fastening element at the add-on element (40),
b) arranging (B) the add-on element (40) with fastening element at a first component (80) so that the positioning and supporting element (30) as well as the adjusting element (50) are arranged between the first (80) and a second component (90),
c) adjusting (C) a distance between the positioning and supporting element (30) and the adjusting element (50) so that the first component (80) contacts the positioning and supporting element (30), and the second component (90) contacts the adjusting element (50), and subsequently
d) mounting (D) a fastening means (110) to the threaded portion (14) of the threaded bolt (10) so that the second component (90) is arranged between the adjusting element (50) and the fastening means (110).

14. Installation method of an add-on element (40) according to claim 13, wherein, during mounting (D) of the fastening element, an angle-compensating washer (112) is arranged between the second component (90) and the fastening means (110).

15. Installation method of an add-on element (40) according to one of the claims 13 to 14, wherein the arranging (A) of the fastening element at the add-on element (40) takes place by riveting the fastening portion (12) to the add-on element (40).

16. Installation method for an add-on element (40) according to one of the claims 13 to 15, wherein the first component (80) comprises at least one opening (82) into which the positioning and supporting element (30) can be clipped, and the second component (90) comprises openings (92) through which an end section of the threaded portion (14) projects for arranging the fastening means (110).

17. A deinstallation method of an add-on element (40), in particular a roof rail, that is arranged at a second component (90) by means of the fastening element with tolerance-compensation function according to one of the claims 1 to 8, wherein the positioning and supporting element (30) as well as the adjusting element (50) are arranged between a first (80) and the second component (90), wherein the method comprises the following steps:
a) releasing (A) a fastening of the fastening element, then
b) lifting (B) the add-on element (40) until the positioning and supporting element (30) comes into contact with the first component (80), and then
c) removing (C) the fastening element by means of a suitable removal device (120).

## Revendications

1. Elément de fixation comprenant un compensateur de tolérance, destiné à fixer des pièces rapportées (40), en particulier des enjoliveurs de pavillon, qui présente les caractéristiques suivantes :
a) un boulon fileté (10) avec une zone de fixation (12) pour une pièce rapportée (40), une zone filetée (14) ainsi qu'une saillie (16) radiale entre la zone de fixation (12) et la zone filetée (14),
b) un élément de positionnement et de soutien (30) qui est disposé au voisinage de la zone de fixation sur le boulon fileté (10) et s'appuie sur la saillie (16),
c) un élément de réglage (50) qui est disposé dans la zone filetée (14) de telle sorte qu'un écart à l'élément de positionnement et de soutien (30) est réglable, et présente un filet intérieur adapté à la zone filetée (14), ainsi qu'un moyen d'entraînement (66), le moyen d'entraînement (66) étant disposé en position intérieure radialement, et
d) un moyen de fixation (110) qui est disposé dans la zone filetée (14) au voisinage de l'élément de réglage (50).

2. Elément de fixation selon la revendication 1, l'élément de réglage (50) étant en prise avec l'élément de positionnement et de soutien (30).

3. Elément de fixation selon une des revendications précédentes, l'élément de réglage (50) étant formé d'un capot (52), d'une partie supérieure de réglage (60) en forme de cylindre creux ainsi que d'une partie inférieure de réglage (70) annulaire, et la partie supérieure de réglage (60) présentant le filet intérieur adapté ainsi que le moyen d'entraînement (66).

4. Elément de fixation selon la revendication 3, le capot (52) présentant au moins une nervure (56) située intérieurement au voisinage d'une première extrémité axiale, et la partie supérieure de réglage (60) présentant, à une première extrémité axiale, au moins un dégagement (62) qui peut être amené en prise avec la nervure (56) au moins au nombre de un située intérieurement.

5. Elément de fixation selon une des revendications 3-4, la partie supérieure de réglage (60) présentant un tronçon de coussinet sphérique (68) à une deuxième extrémité axiale, et la partie inférieure de réglage (70) annulaire présentant sur un premier côté un tronçon sphérique (72) qui peut être amené en appui contre le tronçon de coussinet sphérique (68) de la partie supérieure de réglage (60).

6. Elément de fixation selon une des revendications 3-5, le capot (52) présentant un bourrelet (58) situé intérieurement au voisinage d'une deuxième extrémité axiale, le bourrelet (58) pouvant être amené en prise avec un deuxième côté de la partie inférieure de réglage (70) annulaire de telle sorte que la partie supérieure de réglage (60) et la partie inférieure de réglage (70) peuvent être disposées dans le capot (52).

7. Elément de fixation selon une des revendications 3-6, le capot (52) présentant au moins un bec d'encliquetage (54) périphérique extérieur qui est disposé au voisinage de la première extrémité axiale et qui peut être amené en prise avec l'élément de positionnement et de soutien (30).

8. Elément de fixation selon une des revendications précédentes, l'élément de positionnement et de soutien (30) étant un cadre de centrage.

9. Elément de fixation selon une des revendications précédentes, l'élément de positionnement et de soutien (30) présentant des pieds d'encliquetage (34).

10. Elément de fixation selon une des revendications précédentes, le moyen d'entraînement (66) étant un polygone creux, en particulier un hexagone creux.

11. Elément de fixation selon une des revendications précédentes, le boulon fileté (10) étant une vis à river à l'aveugle.

12. Véhicule, sur lequel une pièce rapportée (40), en particulier un enjoliveur de pavillon, est fixé au moyen d'un élément de fixation comprenant un compensateur de tolérance selon une des revendications 1 à 11.

13. Procédé de montage d'une pièce rapportée (40), en particulier d'un enjoliveur de pavillon, au moyen de l'élément de fixation comprenant un compensateur de tolérance selon une des revendications 1 à 11, qui présente les étapes suivantes :
a) agencement (A) de l'élément de fixation sur la pièce rapportée (40),
b) agencement (B) de la pièce rapportée (40) avec l'élément de fixation sur un premier composant (80) de telle sorte que l'élément de positionnement et de soutien (30) ainsi que l'élément de réglage (50) sont disposés entre le premier composant (80) et un deuxième composant (90),
c) réglage (C) d'un écart entre l'élément de positionnement et de soutien (30) et l'élément de réglage (50) de telle sorte que le premier composant (80) est en contact avec l'élément de positionnement et de soutien (30), et le deuxième composant (90) est en contact avec l'élément de réglage (50), et ensuite
d) mise en place (D) d'un moyen de fixation (110) sur la zone filetée (14) du boulon fileté (10) de telle sorte que le deuxième composant (90) est disposé entre l'élément de réglage (50) et le moyen de fixation (110).

14. Procédé de montage d'une pièce rapportée (40) selon la revendication 13, une rondelle (112) réalisant une compensation d'angle étant disposée entre le deuxième composant (90) et le moyen de fixation (110) lors de la mise en place (D) de l'élément de fixation.

15. Procédé de montage d'une pièce rapportée (40) selon une des revendications 13-14, l'agencement (A) de l'élément de fixation sur la pièce rapportée (40) s'effectuant au moyen du rivetage de la zone de fixation (12) sur la pièce rapportée (40).

16. Procédé de montage d'une pièce rapportée (40) selon une des revendications 13-15, le premier composant (80) présentant au moins une ouverture (82) dans laquelle l'élément de positionnement et de soutien (30) peut être clipsé, et le deuxième composant (90) présentant des ouvertures (92) d'où dépasse un tronçon d'extrémité de la zone filetée (14) pour la disposition du moyen de fixation (110).

17. Procédé de démontage d'une pièce rapportée (40), en particulier d'un enjoliveur de pavillon, qui est disposé sur un deuxième composant (90) au moyen de l'élément de fixation comprenant un compensateur de tolérance selon une des revendications 1 à 8, l'élément de positionnement et de soutien (30) ainsi que l'élément de réglage (50) étant disposés entre un premier composant (80) et le deuxième composant (90), le procédé prenant les étapes suivantes :
a) desserrage (A) d'une fixation de l'élément de fixation, puis
b) soulèvement (B) de la pièce rapportée (40) jusqu'à ce que l'élément de positionnement et de soutien (30) vienne en contact avec le premier composant (80), et puis
c) enlèvement (C) de l'élément de fixation au moyen d'un dispositif d'enlèvement (120) approprié.
